# FASCICULE DE BREVET EUROPEEN

(11) **EP 2 580 092 B1**
(45) Date de publication et mention de la délivrance du brevet: **27.08.2014**
(21) Numéro de dépôt: 11735476.1
(22) Date de dépôt: 10.06.2011
(51) Int. Cl.: B60Q 1/32

(54) **GARNITURE DE LONGERON D'UN VEHICULE AUTOMOBILE**
AUTOMOBILVERKLEIDUNGSTEIL
TREAD TRIM OF A MOTOR VEHICLE

(30) Priorité: 11.06.2010 FR 1054644
(43) Date de publication de la demande: 17.04.2013
(73) Titulaire: Peugeot Citroën Automobiles SA, 78140 Vélizy Villacoublay (FR)
(72) Inventeur: RICHARD, Olivier, F-68130 Wittersdorf (FR)
(86) Numéro de dépôt international: PCT/FR2011/051325
(87) Numéro de publication internationale: WO 2011/154667

(56) Documents cités:
- EP-A2- 2 062 784
- US-A1- 2008 253 140
- US-A1- 2009 257 241

## Description

La présente invention concerne une garniture de longeron d'un véhicule automobile accueillant un seuil de porte.

L'acheteur d'un véhicule automobile a normalement le choix entre plusieurs variantes d'équipement pour sa voiture. Du point de vue du style, il a souvent le choix entre des finitions de certains détails qui peuvent être différents. Un de ces détails concerne la garniture de l'habitacle du véhicule avec des éléments en inox. Ceci donne au véhicule un air plus sportif et/ou élégant.

Pour rendre une voiture moins onéreuse, sur les modèles de base ces gadgets sont remplacés par des pièces moins onéreuses comme des éléments en matière plastique.

Ainsi, la garniture de longeron d'un véhicule automobile peut porter un seuil de porte avec des finitions différentes. Le seuil de porte peut être fabriqué en matière plastique, peut être une pièce en inox, ou, pour rendre une voiture encore plus personnalisé, le seuil peut être rétro-éclairé en affichant un symbole, un décor ou un logo.

Le but de la présente invention est de proposer une garniture de longeron d'un véhicule automobile accueillant un seuil de porte qui permet l'équipement avec des seuils de porte de différentes finitions et/ou, sans nécessité de prévoir des différentes garnitures de longeron pour différents seuils de porte.

L'objet de la présente invention est de proposer une garniture de longeron d'un véhicule automobile accueillant un seuil de porte et le corps de la garniture comportant un logement, s'étendant essentiellement le long de l'axe longitudinal de la garniture (1) et étant obturé par ledit seuil de porte, choisi parmi plusieurs modèles avec des niveaux de finition et/ou des fonctionnalités différentes, le seuil de porte ayant la forme d'un couvercle avec des bords rabattus et étant logé dans un renforcement de la surface supérieure de la garniture, le seuil étant un seuil rétroéclairé avec un système d'éclairage aménagé dans le logement du corps de la garniture, une découpe dans sa partie couvercle étant comblée par une fenêtre translucide, le système d'éclairage comportant un boîtier ouvert vers le haut, reposant avec ses bords supérieurs sur les bords du logement du corps de la garniture et comprenant sur son fond un circuit imprimé avec plusieurs diodes LED régulièrement réparties le long de son axe longitudinal, le boîtier est refermé avec la fenêtre translucide en plexiglas, sur laquelle est monté la partie couvercle du seuil avec sa découpe, la fenêtre translucide est surélevée dans sa partie faisant face à la découpe pour aligner sa surface supérieure avec celle de la partie couvercle du seuil, et en ce que la partie couvercle du seuil est emboutie autour de la découpe pour créer un logement pour un cache translucide.

Le seuil de porte peut avoir la forme d'un couvercle avec des bords rabattus et peut être logé dans un renfoncement de la surface supérieure de la garniture.

De préférence, le cache comprend un film imprimé translucide portant un décor ou un logo.

La partie couvercle du seuil peut être en inox ou en plastique.

L'invention sera mieux comprise à la lecture de la description d'un mode de réalisation préféré en référence aux dessins, dans lesquels:
- Fig. 1: montre une vue éclatée d'un mode de réalisation d'une garniture de longeron selon l'invention; et
- Fig. 2: montre 3 finitions différentes de seuils de porte d'une garniture de longeron selon l'invention.

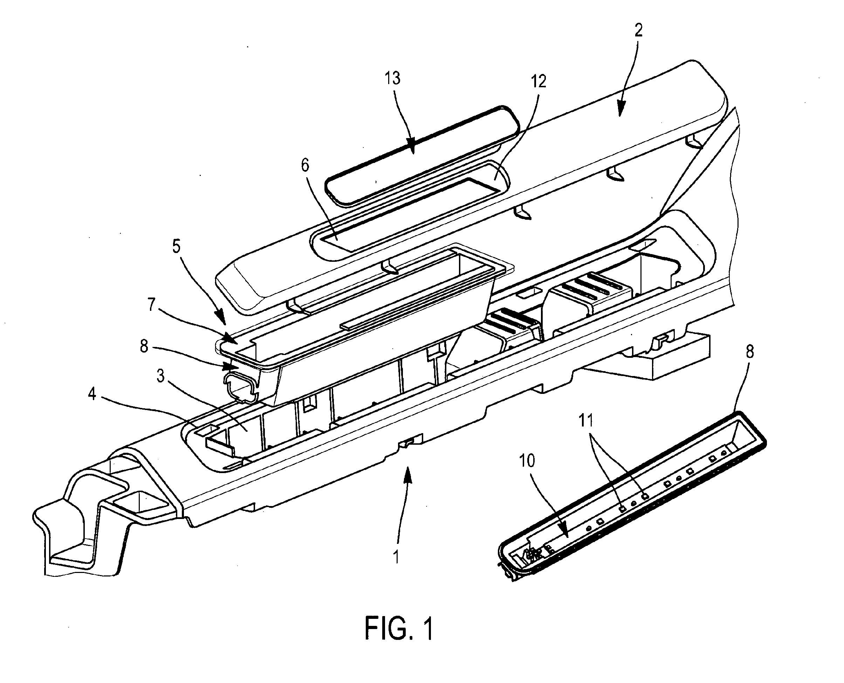

Fig. 1 est une vue éclatée d'un mode de réalisation d'une garniture de longeron 1 selon l'invention. Le corps de la garniture 1 comporte un logement 3 ouvert vers le haut, qui accueille, le cas échéant, un système d'éclairage 5, comportant un boîtier 8 dans lequel se trouve un circuit imprimé 10 avec des diodes LED 11 réparties d'une manière régulière le long de son axe longitudinal. Le boîtier 8 est fermé en haut par une fenêtre translucide 7. Autour de son bord supérieur, le logement 3 comporte un renfoncement 4, qui présente les mêmes contours qu'un seuil de porte 2 qui repose sur la garniture de longeron 1 avec une découpe 6 face au système d'éclairage 5. La découpe 6, elle aussi, est encadrée par un renfoncement 12 dans lequel repose un cache 13 translucide qui comprend un film imprimé translucide portant un décor, des symboles ou un logo.

Fig. 1 montre donc une garniture de longeron avec un seuil de porte rétro-éclairé. La source de lumière, c'est-à-dire les LED, peuvent être contrôlés par un commutateur électrique qui est en position de marche quand la porte de véhicule est ouverte.

Ce mode de réalisation d'un seuil rétro-éclairé présente la version la plus luxueuse d'un seuil de porte. Si le client ne retient pas ce gadget, il peut choisir des finitions plus simples et moins onéreuses.

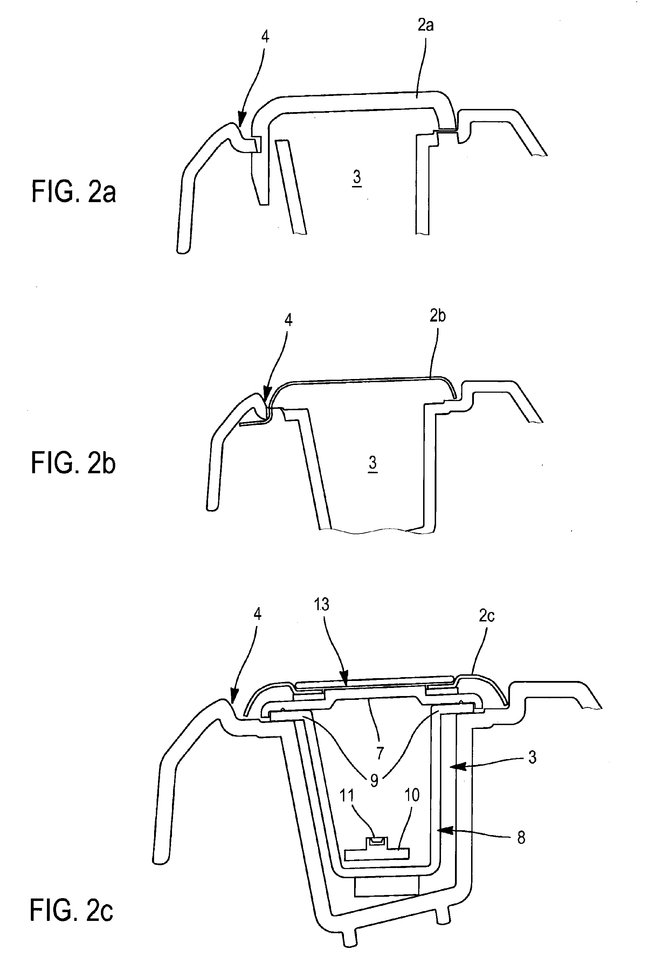

Fig. 2 montre 3 finitions possibles. Fig. 2a montre un seuil de porte 2a en matière plastique. Dans ce cas le seuil de porte 2a présente un simple couvercle de l'ouverture dans la garniture de longeron 1 au-dessus du logement 3 et qui n'a pas de fonction supplémentaire dans ce mode de réalisation.

De la même manière, comme le montre Fig. 2b, un seuil de porte 2b en inox peut être aménagé sur la surface supérieure de la garniture de longeron 1.

Fig. 2c montre la garniture de longeron avec un seuil de porte rétro-éclairé 2c tel que montré en Fig. 1. Le boîtier 8 repose avec son bord supérieur 9 sur les bords supérieurs du logement 3. Sur le fond du boîtier 8 est aménagé le circuit imprimé 10 avec ses diodes LED 11. Le boîtier 8 est fermé par sa fenêtre 7 en matière translucide. Cette fenêtre translucide 7 comporte au niveau de la découpe 6 dans le seuil de porte 2 une partie surélevée pour aligner le niveau de sa surface supérieure avec le niveau de la partie emboutie autour de la découpe 6 du seuil de porte 2. Le seuil de porte 2c montré en Fig. 2c est en inox, mais il peut être aussi fabriqué en matière plastique.

Dans cette partie 12 du seuil de porte 2c en inox repose le cache 13, également translucide et étant imprimé avec des symboles, un décor ou un logo. Comme on peut le remarquer sur Fig. 2c, avec cet aménagement du seuil de porte rétro-éclairé, on obtient une surface de l'ensemble de la garniture de longeron 1 et du seuil de porte 2 plane sans protubérances gênantes.

La modularité de cette conception d'une garniture de longeron avec seuil de porte aide à réduire les coûts de fabrication, puisque seulement un unique modèle d'un corps de garniture de longeron doit être fabriqué pour les trois versions de finition. Ceci réduit le coût de l'outillage pour sa fabrication, le stockage et la distribution d'une telle pièce.

## Revendications

1. Garniture de longeron (1) d'un véhicule automobile accueillant un seuil de porte (2), le corps de la garniture comportant un logement (3), ouvert vers le haut, s'étendant essentiellement le long de l'axe longitudinal de la garniture (1) et étant obturé par ledit seuil de porte (2), choisi parmi plusieurs modèles (2a; 2b; 2c) avec des niveaux de finition et/ou des fonctionnalités différentes, le seuil de porte (2) ayant la forme d'un couvercle avec des bords rabattus et étant logé dans un renfoncement (4) de la surface supérieure de la garniture (1), le seuil (2) étant un seuil rétroéclairé (2c) avec un système d'éclairage (5) aménagé dans le logement (3) du corps de la garniture (1), **caractérisée en ce que** une découpe (6) dans sa partie couvercle étant comblée par une fenêtre translucide (7), le système d'éclairage (5) comporte un boîtier (8) ouvert vers le haut, reposant avec ses bords supérieurs (9) sur les bords du logement (3) du corps de la garniture (1) et comprenant sur son fond un circuit imprimé (10) avec plusieurs diodes LED (11) régulièrement réparties le long de son axe longitudinal, le boîtier (8) est refermé avec la fenêtre translucide (7) en plexiglas, sur laquelle est monté la partie couvercle du seuil (2c) avec sa découpe (6), **en ce que** la fenêtre translucide (7) est surélevée dans sa partie faisant face à la découpe (6) pour aligner sa surface supérieure avec celle de la partie couvercle du seuil (2c), et **en ce que** la partie couvercle du seuil (2c) est emboutie (12) autour de la découpe (6) pour créer un logement pour un cache translucide (13).

2. Garniture de longeron (1) selon la revendication 1, **caractérisée en ce que** le cache (13) comprend un film imprimé translucide portant un décor ou un logo.

3. Garniture de longeron (1) selon une quelconque des revendications précédentes, **caractérisée en ce que** la partie couvercle du seuil (2b; 2c) est en inox.

4. Garniture de longeron (1) selon une quelconque des revendications 1 à 3, **caractérisée en ce que** la partie couvercle du seuil est en matière plastique (2a).

## Patentansprüche

1. Längsträgerverkleidung (1) eines Kraftfahrzeugs, die eine Türschwelle (2) aufnimmt, wobei der Körper der Verkleidung eine Aufnahme (3), die nach oben offen ist, aufweist, die sich im Wesentlichen entlang der Längsachse der Verkleidung (1) erstreckt und durch die Türschwelle (2) verschlossen ist, ausgewählt aus mehreren Modellen (2a; 2b; 2c) mit unterschiedlichen Endfertigungniveaus und/oder Funktionalitäten, wobei die Türschwelle (2) die Form eines Deckels mit heruntergeklappten Rändern hat und in einer Vertiefung (4) der oberen Oberfläche der Verkleidung (1) untergebracht ist, wobei die Türschwelle (2) eine Türschwelle mit Hintergrundbeleuchtung (2c) mit einem Beleuchtungssystem (5) ist, das in einer Aufnahme (3) des Körpers der Verkleidung (1) eingerichtet ist, **dadurch gekennzeichnet, dass** ein Ausschnitt (6) in ihrem Deckelteil durch ein durchscheinendes Fenster (7) gefüllt ist, wobei das Beleuchtungssystem (5) ein Gehäuse (8) aufweist, das nach oben offen ist, das mit seinen oberen Rändern (9) auf den Rändern der Aufnahme (3) des Körpers der Verkleidung (1) ruht und auf ihrem Grund eine Leiterplatte (10) mit mehreren Dioden LED (11) aufweist, die regelmäßig entlang ihrer Längsachse verteilt sind, dass das Gehäuse (8) mit dem durchscheinenden Fenster (7) aus Plexiglas wieder verschlossen ist, auf dem der Deckelteil der Schwelle (2c) mit seinem Ausschnitt (6) montiert ist, dass das durchscheinende Fenster (7) in seinem Teil, der dem Ausschnitt (6) gegenüberliegt, überhöht ist, um seine obere Oberfläche mit der des Deckelteils der Schwelle (2c) auszurichten, und dass der Deckelteil der Schwelle (2c) um den Ausschnitt (6) gestanzt (12) ist, um eine Aufnahme für eine durchscheinende Abdeckung (13) zu schaffen.

2. Längsträgerverkleidung (1) nach Anspruch 1, **dadurch gekennzeichnet, dass** die Abdeckung (13) eine durchscheinende bedruckte Folie aufweist, die ein Dekor oder ein Logo trägt.

3. Längsträgerverkleidung (1) nach einem der vorhergehenden Ansprüche, **dadurch gekennzeichnet, dass** der Deckelteil der Schwelle (2b; 2c) aus rostfreiem Stahl besteht.

4. Längsträgerverkleidung (1) nach einem der Ansprüche 1 bis 3, **dadurch gekennzeichnet, dass** der Deckelteil der Schwelle aus Kunststoff (2a) besteht.

## Claims

1. A side rail trim (1) of a motor vehicle accommodating a door sill (2), the body of the trim comprising a housing (3) which is open to the top, extending substantially along the longitudinal axis of the trim (1) and being closed off by the said door sill (2), selected from several models (2a; 2b; 2c) with different levels of finishing and/or functionalities, the door sill (2) having the form of a cover with flanged edges and being housed in a reinforcement (4) of the upper surface of the trim (1), the sill (2) being a backlit sill (2c) with a lighting system (5) installed in the housing (3) of the body of the trim (1), **characterized in that** a cutout (6) in its cover part being filled by a translucent window (7), the lighting system (5) comprises a case (8) which is open to the top, resting with its upper edges (9) on the edges of the housing (3) of the body of the trim (1) and including on its bottom a printed circuit (10) with a plurality of LED diodes (11) regularly distributed along its longitudinal axis, the case (8) is closed with the translucent window (7) of plexiglass, on which there is mounted the cover part of the sill (2c) with its cutout (6), **in that** the translucent window (7) is raised in its part facing the cutout (6) to align its upper surface with that of the cover part of the sill (2c), and **in that** the cover part of the sill (2c) is stamped (12) around the cutout (6) to create a housing for a translucent mask (13).

2. The side rail trim (1) according to claim 1, **characterized in that** the mask (13) includes a translucent printed film bearing a decoration or a logo.

3. The side rail trim (1) according to any one of the preceding claims, **characterized in that** the cover part of the sill (2b; 2c) is of stainless steel.

4. The side rail trim (1) according to any one of claims 1 to 3, **characterized in that** the cover part of the sill is of plastic material (2a).
